## Europäisches Patentamt
## European Patent Office
## Office européen des brevets

(11) Numéro de publication: **0 191 656**
**B1**

# FASCICULE DE BREVET EUROPÉEN

(45) Date de publication du fascicule du brevet:
06.12.89

(51) Int. Cl.⁴: **G 09 G  1/16,** G 06 F  15/62

(21) Numéro de dépôt: **86400021.1**

(22) Date de dépôt: **07.01.86**

(54) **Générateur de caractères et utilisation d'un tel générateur dans un système de visualisation.**

(30) Priorité: **11.01.85  FR 8500400**

(43) Date de publication de la demande:
**20.08.86 Bulletin 86/34**

(45) Mention de la délivrance du brevet:
**06.12.89 Bulletin 89/49**

(84) Etats contractants désignés:
**CH DE GB IT LI NL**

(56) Documents cité:
**IBM TECHNICAL DISCLOSURE BULLETIN, vol. 20, no. 12, mai 1978, pages 5367-5369, New York, US; A.S. MURPHY: "Algorithm for rotating bit images"**

(73) Titulaire: **THOMSON- CSF, 173, boulevard Haussmann, F-75379 Paris Cedex 08 (FR)**

(72) Inventeur: **Ligocki, Philippe, THOMSON- CSF SCPI 19, avenue de Messine, F-75008 Paris (FR)**
Inventeur: **Gallez, François, THOMSON- CSF SCPI 19, avenue de Messine, F-75008 Paris (FR)**
Inventeur: **Bouchez, Bruno, THOMSON- CSF SCPI 19, avenue de Messine, F-75008 Paris (FR)**

(74) Mandataire: **Lincot, Georges, THOMSON- CSF SCPI, F-92045 PARIS LA DEFENSE CEDEX 67 (FR)**

LIBER, STOCKHOLM 1989

## Description

L'invention se rapporte aux systèmes de visualisation d'images alphanumériques ou semi-graphiques, et d'images graphiques.

De tels systèmes comportent généralement un système de calcul auquel est associé un processeur graphique d'entrée-sortie couplé à un générateur de vecteurs et de caractères et à un processeur dit de surfaçage, eux-mêmes couplés aux différents postes de travail du système par l'intermédiaire d'une mémoire d'images associée à des circuits contrôleurs vidéo et de dialogue qui effectuent la gestion des postes de travail.

L'invention se rapporte plus particulièrement aux générateurs de caractères nécessaires dans de tels systèmes de visualisation, et aux systèmes de visualisation comportant de tels générateurs.

Classiquement le générateur de caractères est un processeur câblé, qui comporte une mémoire de caractères et dont la fonction est la génération de caractères alphanumériques; ces caractères sont définis dans la mémoire par des descriptifs, et peuvent être appelés par exemple par leur code ASCII. Toutes les données nécessaires sont fournies au générateur de caractères par le processeur graphique via un bus d'unité de traitement. Dans un tel système, il n'y a normalement pas de traitement possible de ces caractères dans le générateur.

L'invention a pour objet un générateur de caractères perfectionné car des fonctions de traitement sont possibles à son niveau, en particulier une rotation des caractères, chaque caractère stocké en mémoire pouvant être visualisé suivant quatre orientations à 90°, au gré de l'utilisateur, l'écriture se faisant elle aussi suivant quatre directions à 90°, indépendemment du sens des caractères, et cela sans ralentir la vitesse d'écriture de ces caractères dans la mémoire d'image qui suit ce générateur de caractères, et donc dans le poste de travail. Cette rotation est obtenue à partir d'une seule police de caractères et le générateur permet de transférer ces caractères à la mémoire d'images suivant l'une des 4 orientations possibles sans duplication de la matrice et sans augmentation du temps de traitement par rapport à un générateur qui n'offrirait pas cette possibilité.

Dans un mode particulier de réalisation, le système de visualisation travaillant par blocs de 64 points (8 x 8), le générateur de caractères est particulièrement adapté au traitement par blocs des caractères.

Suivant l'invention un générateur de caractères comportant une mémoire de caractères, des moyens d'adressage de la mémoire caractères et un registre d'accès à la mémoire caractères, est caractérisé en ce que, la mémoire de caractères comporte un seul descriptif par caractère et en ce que, entre la sortie de la mémoire caractères et la sortie du générateur de caractères sont prévus des circuits de traitement en rotation des caractères assurant le transfert des caractères avec une éventuelle rotation par rapport à l'orientation associée aux descriptifs des caractères dans la mémoire de caractères, par sélection et transmission directe, sur commande extérieure mise en mémoire dans un registre de commande, sans augmentation des temps de transfert.

L'invention a également pour objet l'utilisation d'un tel générateur de caractères dans un système de visualisation.

L'invention sera mieux comprise et d'autres caractéristiques apparaîtront à l'aide de la description qui suit en référence aux figures annexées.

- La figure 1 est un schéma synoptique de l'étage de génération de caractères du système de visualisation suivant l'invention;
- La figure 2 représente un caractère dans les quatre orientations possibles pour la visualisation;
- La figure 3 est un schéma de l'emplacement des différents bits descriptifs d'un caractère dans les emplacements élémentaires d'un bloc caractère, suivant l'orientation du caractère choisie pour la visualisation;
- La figure 4 est un schéma synoptique du générateur de caractères suivant l'invention;
- La figure 5 est un schéma détaillé des circuits de sélection de rotation et de décadrage du générateur de caractères suivant l'invention;
- La figure 6 est un schéma explicatif du fonctionnement des circuits de décadrage;
- La figure 7 est un schéma du circuit d'interface bus UT, 20, de la figure 1;
- La figure 8 est un schéma du séquenceur, 40, de la figure 1;
- La figure 9 est un schéma du circuit de gestion d'adresses, 50, de la figure 1.

Sur l'ensemble de ces figures, les traits obliques barrant les liaisons entre éléments indiquent les liaisons multiples, ou bus, et les nombres qui y sont associés indiquent le nombre de fils de la liaison dans un mode de réalisation.

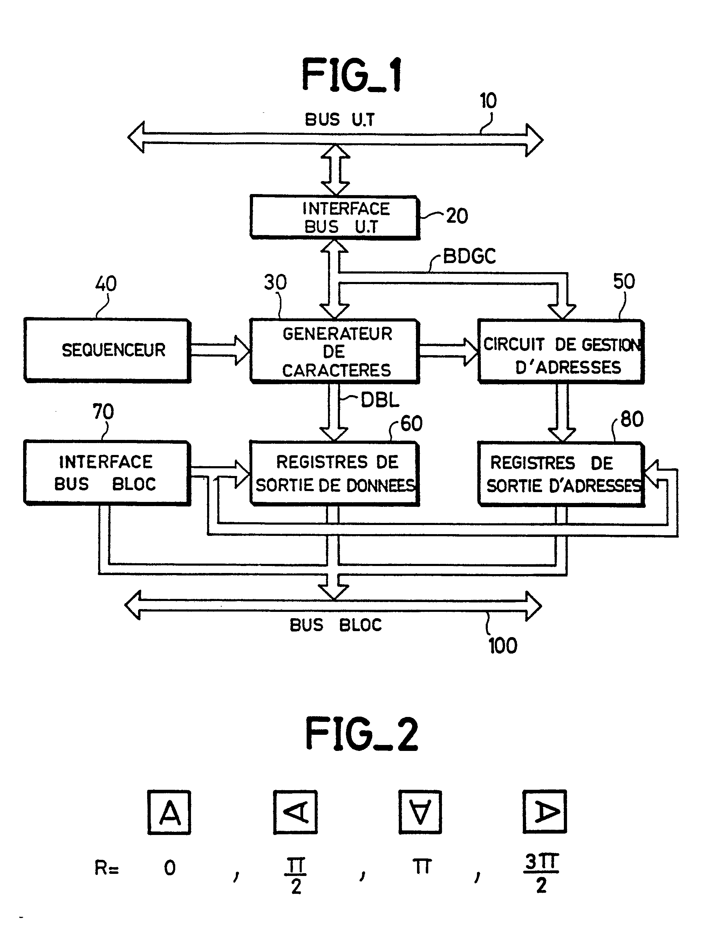

L'étage de génération de caractères a pour but d'écrire, dans une mémoire de visualisation, les caractères à visualiser demandés par l'intermédiaire de commandes envoyées par un processeur graphique via un bus d'unité de traitement dit bus UT. Cet étage de génération de caractères, représenté sur la figure 1 comporte donc essentiellement, entre le bus unité de traitement UT, 10, à coupler aux circuits de commande d'un processeur graphique et le bus dit bus bloc 100, à coupler à une mémoire de visualisation, un circuit d'interface bus UT, 20, le circuit générateur de caractères proprement dit, 30, couplé d'une part à ce circuit d'interface 20, d'autre part à un séquenceur 40 qui lui transmet des signaux de commande et à un circuit de gestion, 50, des adresses mémoire de ce générateur de caractères. Ce générateur 30 fournit aux registres de sortie de données, 60, les informations à transmettre au bus bloc 100. Un circuit d'interface dit "interface bus bloc", 70 est relié d'une part aux registres de sorties de données 60, et d'autre part au bus bloc 100. Ce circuit d'interface est également relié à un registre de sorties d'adresses 80, qui reçoit des données d'adresses du circuit de gestion d'adresses 50, et les transmet au bus bloc 100 sur commande de l'interface bus bloc 70. Dans cet étage, le générateur de caractères 30, piloté en partie par le séquenceur 40, permet une mise en forme des données à écrire dans la mémoire de visualisation au format "bloc", et une gestion de l'envoi de ces données sur le bus bloc correspondant, 100. Ainsi, de manière synthétique, un tel étage de génération de caractères ne se distingue pas des systèmes utilisés dans l'art antérieur. Cependant, le générateur de caractères 30 suivant l'invention permet de réaliser des fonctions de rotation et de décadrage spécifiques, qui ne sont normalement pas prévues dans les étages de génération de caractères habituels.

La figure 2 est un exemple de caractère à visualiser, soit A, représenté selon quatre orientations de visualisation possibles: avec une rotation nulle, avec une rotation R = $\pi/2$, avec une rotation de $\pi$, et avec une rotation de 3 $\pi/2$. Le carré dans lequel est représenté ce caractère correspond à un bloc de 64 pixels organisés en 8 lignes de 8 points. De manière classique chaque caractère s'inscrit dans un bloc et est représenté dans une "police" par un descriptif de caractère composé de 8 mots de 8 bits, chaque bit correspondant à 1 pixel. Il peut y avoir également, dans les descriptifs de caractères, des caractères inscriptibles dans plusieurs blocs par exemple en 16 lignes de 16 points (4 blocs), en 24 lignes de 24 points (9 blocs), ou en 32 lignes de 32 points (16 blocs).

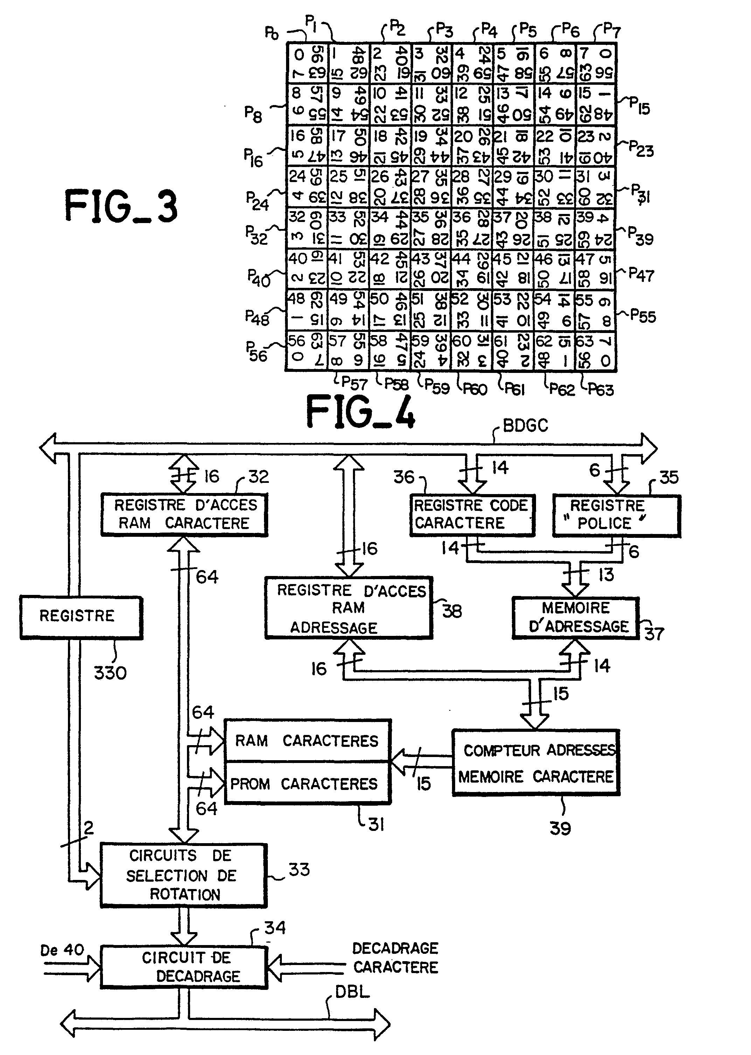

La figure 3 montre une matrice d'un bloc associé à un caractère, dans laquelle sont représentées les 4 possibilités d'orientation du caractère, les numéros de pixels $P_0$, $P_1...P_{63}$ pour l'inscription dans la mémoire d'image étant inchangés d'une position à l'autre de la rotation. Ainsi, en supposant que le $12^e$ bit du descriptif caractère, $b_{11}$, corresponde au sommet du caractère A, ce bit doit pouvoir être associé dans le système suivant l'invention à l'un de 4 pixels (ou espaces image élémentaires du bloc), suivant la rotation commandée. Dans cette représentation les numéros des bits du descriptif $b_0$, $b_1...b_{63}$ d'un caractère au format bloc (8 x 8) sont lisibles dans le sens de la rotation à laquelle ils sont associés. Un carré élémentaire représente un pixel et les quatre numéros qu'il comporte sont les rangs des bits du descriptif caractère pour les 4 rotations possibles. De plus, l'affichage dans la mémoire d'images qui suit l'étage de génération de caractères étant prévu par bloc, une autre fonction est prévue dans le générateur de caractères de façon à pouvoir décaler ou "décadrer" un caractère par rapport à un bloc mémoire. Le décadrage peut s'effectuer dans un sens ou dans l'autre, à droite ou à gauche, un caractère étant alors affiché dans la mémoire d'images à cheval sur plusieurs blocs.

Les circuits prévus dans le générateur de caractères pour réaliser ces deux fonctions, rotation et décadrage sont optimisés pour n'entraîner aucun ralentissement dans la visualisation des images par rapport à un générateur qui n'offrirait pas ces possibilités.

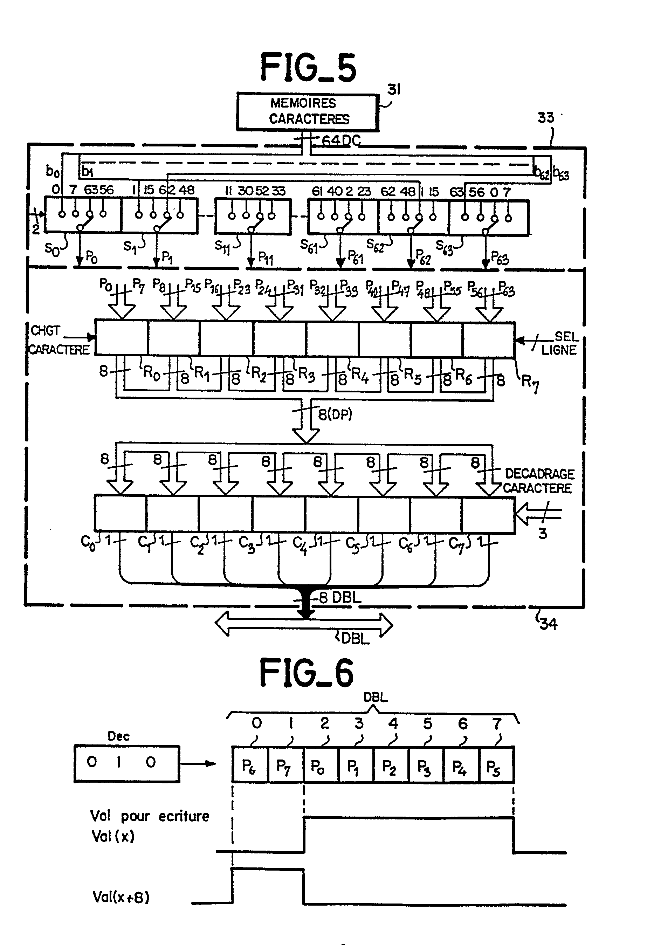

Le schéma synoptique du générateur de caractères 30 de la figure 1, dans le système suivant l'invention, est représenté sur la figure 4. Ce générateur de caractères comporte principalement une mémoire de caractères 31 qui peut être constituée d'une mémoire programmable de manière définitive, (PROM pour programmable read only memory selon la terminologie anglo-saxonne) et d'une mémoire vive (RAM pour random access memory selon la terminologie anglo-saxonne), de façon à enregistrer respectivement des descriptifs de caractères préétablis fournis avec l'appareil et des descriptifs de caractères établis à la demande par l'utilisateur. Cette mémoire est couplée à la sortie du circuit d'interface bus UT 20 par l'intermédiaire d'un registre 32, de 64 bits (4 registres de 16 bits) pour l'accès à la partie RAM de la mémoire caractères en écriture et en lecture, et par l'intermédiaire de circuits d'adressage décrits plus en détails ci-après. La sortie de la mémoire caractères est reliée à l'entrée de circuits de sélection de rotation 33, eux-mêmes reliés à des circuits de décadrage 34, la sortie des circuits de décadrage étant couplée au bus de sortie de données du générateur de caractères relié aux registres de sortie de données 60 (figure 1). La commande de sélection de rotation des circuits 33 est effectuée par deux bits de commande donnés par l'utilisateur via le bus UT et un registre de stockage 330. La commande des circuits de décadrage est réalisée par des signaux de commande issus du circuit de gestion d'adresses et du séquenceur (40 et 50 figure 1) de la manière expliquée plus en détails ci-après.

Pour l'adressage de la mémoire caractères, les circuits d'adressage comportent un registre de "police" 35 et un registre "code caractère" 36, tous deux reliés via l'interface bus unité de traitement 20 (figure 1) au bus d'unité de traitement. Dans ces deux registres sont affichés des codes correspondant à la police de caractères choisie et aux caractères sélectionnés dans cette police, respectivement. Un transcodage, dit "mapping" dans la terminologie anglo-saxonne, est effectué à partir du code caractère pour accéder à la mémoire caractères à l'adresse correspondante. Pour cela, une mémoire de transcodage 37, dite mémoire d'adressage comportant une partie accessible, RAM, et une partie programmée, PROM, est couplée aux sorties des registres police et code caractère 35 et 36. Cette mémoire fournit l'adresse du descriptif caractère dans la mémoire caractères 31, à partir du code caractère et de la police de caractères sélectionnés via le bus UT. Les deux parties mémoire PROM et RAM de cette mémoire 37 comportent chacune une zone dite de justification qui permet de faire dans une séquence de caractères, des espaces réguliers entre eux. La partie accessible, RAM, de cette mémoire l'est en écriture et en lecture à partir du bus UT d'unité de traitement via l'interface bus UT 20, et via un registre d'accès bidirectionnel de 16 bits, 38, prévu entre la sortie de l'interface bus UT 20 et la mémoire d'adressage 37. Les données décodées issues de la mémoire d'adressage 37 sont chargées dans un compteur 39 susceptible d'être incrémenté en cas de caractères multi-blocs c'est-à-dire pour des caractères visualisables dans plusieurs blocs contigus.

Comme indiqué ci-dessus le traitement du caractère comprend deux phases:

- la rotation, où chaque pixel d'un bloc résulte de la sélection d'un bit parmi 4 bits d'un descriptif caractère, selon la valeur de l'angle de rotation 0, $\pi/2$, $\pi$, 3 $\pi/2$
- la mémorisation des 64 pixels ainsi traités par la rotation et le décadrage qui consiste à sélectionner 8 pixels d'une ligne parmi 8 pixels préalablement décadrés; les 8 pixels ainsi obtenus sont transférés sur le bus ligne DBL relié à l'entrée du registre de sortie de données 60.

La figure 5 représente le détail des circuits de sélection 33 et des circuits de décadrage 34. La mémoire caractères 31 présente 64 bits en parallèle. Dans le cas le plus simple, ces 64 bits correspondent au descriptif d'un caractère. Le traitement nécessaire pour permettre une rotation du caractère peut donc être réalisé en parallèle. Pour cela chaque fil du bus de sortie de la mémoire caractères 31 est relié à des entrées prédéterminées de 4 sélecteurs à 4 positions choisis dans un groupe de 64 sélecteurs $S_0...S_{63}$, en fonction de la configuration indiquée dans le schéma représentatif de la figure 3. Ces sélecteurs sont commandés simultanément par deux bits de commande.

Ainsi, par exemple, si on choisit comme numérotation pour les pixels $P_0...P_{63}$ et pour les sélecteurs $S_0...S_{63}$ le même ordre que l'ordre des bits de description d'un caractère $b_0...b_{63}$ avec une rotation nulle, les 64 bits de description du caractère sont appliqués respectivement aux premières entrées des 64 sélecteurs $S_0$, $S_1$, $...S_{63}$, $S_{64}$ dans le même ordre, la sélection de ces premières entrées par les 2 bits de sélection correspondant à une rotation R = 0.

Pour une rotation de $\pi/2$ sélectionnée en positionnant les sélecteurs sur leurs deuxièmes entrées, la deuxième entrée du premier sélecteur $S_0$ est reliée au 8ème bit du descriptif caractère $b_7$ la deuxième entrée du deuxième sélecteur $S_1$ sera reliée au bit $b_{15}$ du descriptif caractère etc... le premier bit $b_0$ étant relié à la deuxième entrée du sélecteur $S_{56}$, le deuxième bit $b_1$ étant relié à la seconde entrée du sélecteur $S_{48}$ etc...

De même, pour une rotation de $\pi$ commandée au niveau des sélecteurs, par le choix de la 3ème position de ces sélecteurs, le premier bit du descriptif caractère $b_0$ est appliqué à la 3ème entrée du dernier sélecteur $S_{63}$, le bit $b_1$ du descriptif caractère est appliqué à l'avant dernier sélecteur $S_{62}$ etc...

Enfin, pour obtenir une rotation de 3 $\pi/2$, commandée lorsque les sélecteurs sont dans la 4ème position, le premier bit du descriptif caractère $b_0$ est appliqué au sélecteur $S_7$, le bit $b_1$ est appliqué au sélecteur $S_{15}$ etc..., la 4ème position du sélecteur $S_0$ étant reliée à $b_{56}$, la 4ème position du second sélecteur étant reliée à $b_{48}$.

Ainsi chaque pixel peut avoir 4 origines différentes suivant la rotation appliquée au caractère et être transféré avec la même vitesse de transfert. A titre d'exemple, le 12ème pixel $P_{11}$ à la sortie du sélecteur $S_{11}$ peut correspondre à $b_{11}$, à $b_{30}$, à $b_{52}$ ou à $b_{33}$ suivant la rotation appliquée au caractère. Ainsi, un descriptif de caractère identique au descriptif en mémoire ou ayant subi une rotation est toujours transféré dans le même temps.

Pour le décadrage, les 64 pixels ainsi obtenus, $P_0...P_{63}$ sont mis en mémoire en parallèle dans 8 registres mémoire $R_0...R_7$ de 8 bits chacun, pour le chargement d'un bloc caractère sur commande de chargement, CHGT caractère. La lecture de ces 8 registres est effectuée successivement, de façon à regrouper les pixels ligne par ligne. Le traitement qui suit pour le décadrage est en effet réalisé ligne par ligne. Pour cette lecture, chaque registre est sélectionné par décodage du contenu d'un compteur de 0 à 7, sur commande par des bits de sélection de ligne SEL/LIGNE. Le traitement par le décadrage consiste à sélectionner pour chaque bloc les 8 pixels d'une ligne à mettre en mémoire dans la mémoire d'image parmi des pixels préalablement "décadrés".

Le décadrage peut avoir 8 valeurs possibles de 0 à 7, et ce décadrage est obtenu au moyen de 8 sélecteurs à 8 positions, $C_0$, $C_1...C_7$ qui reçoivent chacun les 8 bits de données correspondant aux pixels de la ligne sélectionnée, disponibles à la sortie de l'un des registres $R_0...R_7$. Les 8 bits décadrés sont disponibles aux sorties des sélecteurs $C_0...C_7$, mis dans une position fonction du décadrage commandé au moyen de 3 bits de commande. Pour cela les bits $P_0...P_7$ correspondant aux pixels d'une ligne du bloc sont appliqués aux 8 sélecteurs avec la configuration décrite ci-après:

- aux premières entrées des sélecteurs respectivement $C_0...C_7$ dans l'ordre $P_0$, $P_1...P_7$,
- aux deuxièmes entrées des sélecteurs respectivement $C_0$, $C_1...C_7$ dans l'ordre $P_7$, $P_0,...P_6$,
- aux troisièmes entrées des sélecteurs respectivement $C_0$, $C_1$, $C_2...C_7$ dans l'ordre $P_6$, $P_7$, $P_0... P_5$ etc...
- aux 8ème entrées des sélecteurs respectivement $C_0...C_7$ dans l'ordre $P_1$ $P_2...P_7$ $P_0$.

Ainsi les bits associés à une ligne d'un bloc sont transmis dans l'un des ordres indiqués ci-dessus selon les bits de commande donnant le nombre de pas du décadrage. A partir du bus UT, le circuit de gestion d'adresses 50, décrit plus en détails ci-après donne l'adresse en vertical (X) et en horizontal (Y) à partir de laquelle doit être inscrit un bloc caractère dans la mémoire d'image. Toutes les adresses multiples de 8 (en décimal) c'est-à-dire dont les 3 bits de poids faible sont nuls correspondent à un décadrage nul; ces 3 bits de poids faible indiquent dans les autres cas le nombre de pas $d$ du décadrage dans le sens des adresses croissantes, c'est-à-dire à droite à partir de l'adresse bloc, donnée par les autres bits d'adresse. La figure 6 montre pour les 3 bits de décadrage 010, soit un décalage de deux positions, les pixels appliqués à la sortie des sélecteurs $C_0$ à $C_7$ sur le bus ligne DBL. L'inscription des pixels ainsi décalés dans les registres de sortie est fonction de l'adresse du bloc correspondant dans la mémoire. En effet, si x est l'adresse bloc, x étant l'adresse X sans les 3 bits de poids faible, l'inscription des bits $P_0$ à $P_5$ est commandée dans le bloc d'adresse verticale x au moyen d'un signal de validation écriture Val x. Puis, sans modification du décadrage, c'est-à-dire sans modification des données sur le bus DBL, l'inscription des bits associés aux pixels $P_6$ $P_7$ est commandée par un signal de validation écriture inverse, Val (x + 8). En effet un décadrage à droite de $d$ est équivalent à un décadrage à gauche 8 - $d$, à condition que les signaux de validation y associés soient inverses. La même opération doit être répétée pour toutes les lignes du caractère. Il a été supposé ci-dessus que le caractère était décadré par rapport aux blocs mémoire en horizontal. Si le caractère est également décadré en vertical c'est le circuit de gestion d'adresses qui transmet, pour les données à écrire dans la mémoire, les adresses correspondantes et gère les adresses Y (verticales).

La description ci-après plus détaillée des circuits de l'étage de génération de caractères entourant le générateur de caractères proprement dit permettront de mieux comprendre le fonctionnement du système de visualisation suivant l'invention.

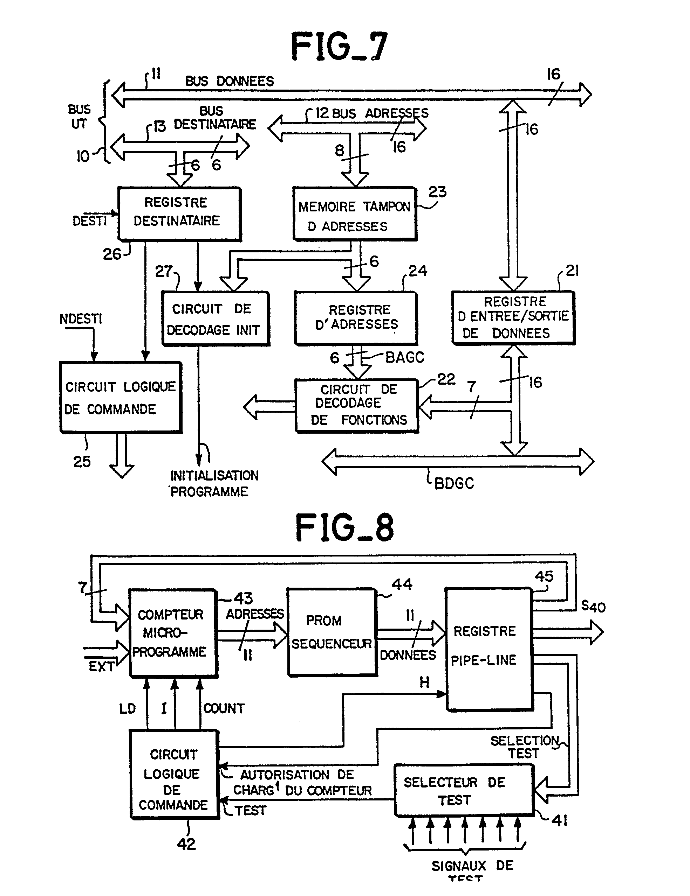

L'interface 20 entre le bus unité de traitement 10 couplé vers l'extérieur au processeur graphique, et le générateur de caractères 30 et le circuit de gestion d'adresses 50 peut être constitué de la manière suivante donné en référence au schéma synoptique de la figure 7: on suppose que le bus d'unité de traitement est un bus multiple qui comporte un bus de données 11 par exemple de 16 bits, un bus d'adresses, 12, comportant également 16 bits, et un bus dit bus destinataire de 6 bits, 13. Le bus de données 11 est relié à un registre d'entrée/sortie de données 21 de l'interface 20 par un bus bidirectionnel de 16 bits. La sortie de ce registre d'entrée/sortie de données 21 est reliée au bus de données du générateur de caractères BDGC également par un bus de 16 bits. Certains des bits transmis par l'intermédiaire du bus de données permettent de décoder les fonctions assurées par le générateur de caractères. Pour cela un circuit de décodage de fonctions 22 est relié au bus de sortie du registre d'entrée/sortie 21. Le bus d'adresse 12 du bus unité de traitement est relié à une mémoire tampon d'adresses 23 dont la sortie est reliée d'une part à un registre d'adresses 24, d'autre part à un circuit dit de décodage de l'initialisation 27. La sortie du registre d'adresse 24 est également reliée au circuit de décodage de fonctions 22. Dans le circuit de décodage d'initialisation 27, les 6 bits d'adresse sont comparés à des bits fixes et permettent de créer une initialisation programmée. Le bus destinataire 13 est relié à un registre dit registre destinataire 26, et un circuit logique de commande 25 permet en particulier à partir des signaux de destinataire d'assurer le fonctionnement des échanges entre les interfaces.

La figure 8 est un schéma plus détaillé du circuit séquenceur 40 de la figure 1. Il comporte principalement un circuit logique de commande 42 qui fournit des signaux de chargement LD, d'initialisation I, et de comptage COUNT, à un compteur de microprogramme 43 destiné à fournir les adresses des micro-instructions enregistrées dans une mémoire programmable 44, dite PROM séquenceur. La sortie de cette PROM est reliée à un registre dit registre PIPE-LINE 45 qui met en forme les signaux de commande destinés au générateur de caractères. Une sortie de ce registre PIPE-LINE 45 est reliée à l'entrée de commande d'autorisation de chargement d'un compteur du circuit logique de commande 42. De même certaines données issues de la PROM séquenceur 44 via le registre PIPE-LINE 45 sont transmises à un sélecteur de test de conditions logiques 41 dont la sortie fournit un signal au circuit logique de commande 42. Un certain nombre de signaux indicateurs de conditions logiques sont appliqués à ce sélecteur de test 41, par exemple un signal indiquant qu'un espace programmable doit être prévu, un signal indiquant qu'une justification est nécessaire, un signal indiquant le début ou la fin d'un caractère etc... Le séquenceur 40 comporte dans son circuit logique de commande une horloge qui fournit le signal d'horloge H nécessaire au registre PIPELINE.

Ainsi, le séquenceur a pour rôle de piloter le générateur de caractères en ce qui concerne:

- les adresses lors du positionnement d'un caractère du fait d'un espace programmé ou d'une justification,
- les adresses lors de la demande d'écrire d'un caractère multibloc,
- les adresses lors de la demande d'écriture d'un bloc caractère décadré par rapport au bloc mémoire
- l'inhibition de tout nouvel envoi de caractères, donc de changement d'adresse en cas de caractère nul.

Pour cela le séquenceur comporte donc la partie sélecteur de conditions logiques 41 des différents cas précités et une partie commande des ensembles à gérer avec le compteur de micro-programme 43 la mémoire PROM et le registre PIPE-LINE. Le séquenceur peut être commandé à partir d'un pupitre extérieur sur lequel il est possible de visualiser les adresses du compteur de micro- programme. La liaison EXT est prévue sur le compteur de micro-programme à cet effet.

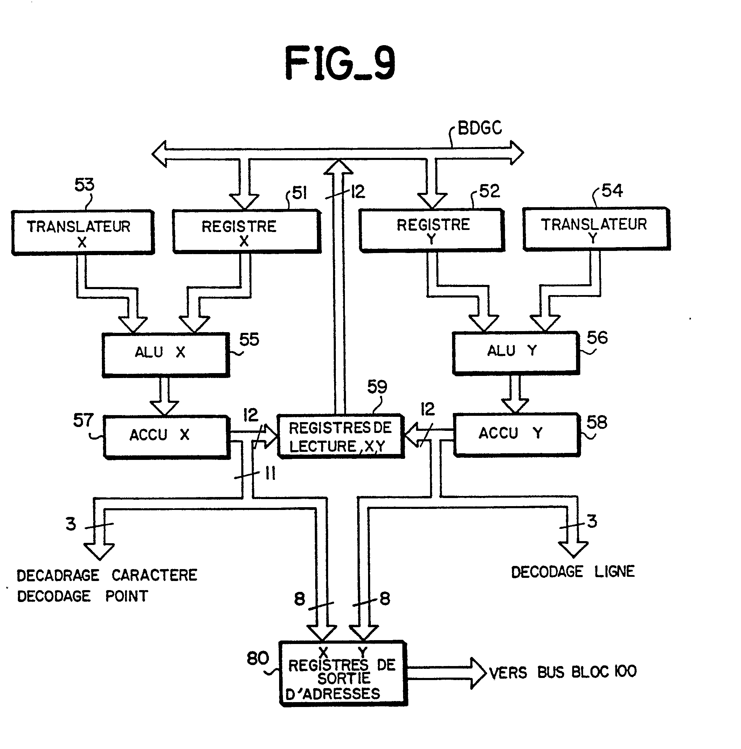

Le circuit de gestion d'adresses 50 de la figure 1, représenté sur la figure 9 se compose de 2 parties identiques relatives aux axes orthonormés X concernant les points et Y concernant les lignes. Chacun de ces circuits comporte un registre d'accès relié au bus de données du générateur de caractères BDGC, respectivement 51 et 52 pour X et Y. Deux translateurs X et Y 53 et 54 respectivement permettent de ramener les coordonnées du système aux coordonnées mémoire soit les coordonnées (0,0) correspondant au milieu de l'écran aux coordonnées mémoire ou (0,0) correspondant au haut gauche de l'écran grâce à des unités arithmétiques et logiques respectivement 55 et 56 qui reçoivent des données pour la première du registre X,51 et du translateur X,53 et pour la seconde du registre Y,52 et du translateur Y,53. Les adresses ainsi ramenées aux coordonnées mémoire sont appliquées à des accumulateurs respectivement 57 et 58 dont les sorties fournissent les adresses X et Y. Les adresses X donnent, par les 3 bits de poids faible, le numéro du point dans un bloc, et donnent également le décadrage caractère à réaliser. Les 8 bits de poids plus élevé sont transmis via le registre de sortie d'adresses 80 au bus bloc 100 relié à la mémoire d'image. De même, pour l'adresse horizontale Y, les 3 bits de poids faible donnent le numéro de la ligne dans le caractère, pour le décodage, les 8 bits de poids plus élevé donnant l'adresse horizontale du bloc et étant transmis via le registre de sortie d'adresse 80 au bus bloc 100 pour la mémoire d'image. Des registres de lecture 59 reliés aux sorties des accumulateurs 57 et 58 ont leurs sorties couplées au bus de données du générateur de caractère BDGC. Ainsi le circuit de gestion des adresses est accessible également en lecture par le bus d'unité de traitement, via le bus de données de générateur de caractères.

Ainsi, le système de gestion des adresses permet de tenir à jour la position du point courant pendant la sortie d'un caractère, et permet également de transformer l'adresse fournie par un processeur graphique pour ramener le point (0,0) en haut et à gauche du plan. Ce circuit de gestion des adresses est accessible en lecture et en écriture par le bus d'unité de traitement UT. Il est par ailleurs possible d'initialiser les registres d'adresses.

Le circuit d'interface bus bloc 70 gère le transfert des données des registres de sortie des données 60 et le transfert des adresses correspondantes des registres de sortie d'adresses 80 à destination du bus bloc 100 pour la mémoire d'image. Cet interface est du type maître, c'est-à-dire que, dès qu'un bloc est près à être émis, le bus est demandé. Quand le dispositif récepteur est libre les données sont émises; pour faciliter le transfert, le registre de sortie des données 60 est double.

L'invention n'est pas limitée au mode de réalisation du générateur de caractères, précisément décrit et représenté. En particulier il a été prévu dans les circuits de sélection de rotation des sélecteurs à 4 positions pour permettre la mise en mémoire d'un caractère dans la mémoire selon l'une de quatre orientations possibles. Cette disposition n'est évidemment pas limitative et il serait possible de prévoir seulement deux orientations pour la rotation avec un bit de commande (0, R = 0. 1, R = π/2 ou π ou π/2 et des sélecteurs à deux positions, ou même 3 orientations, avec un bit de commande (0, R = π/2; 1, R = 3 π/2) un transfert direct étant réalisé en l'absence de rotation etc...

De même les circuits de commande de décadrage peuvent être modifiés en fonction de l'arrangement des données en sortie du générateur de caractères, à destination du bus bloc 100 vers la mémoire d'image sans sortir du cadre de l'invention.

**Revendications**

1. Générateur de caractères comportant une mémoire de caractères (31), des moyens d'adressage de la mémoire caractères (35 à 39) et un registre d'accès (32) à la mémoire caractères, *caractérisé en ce que*, la mémoire de caractères comporte un seul descriptif par caractère et en ce que, entre la sortie de la mémoire caractères (31) et la sortie du générateur de caractères sont prévus des circuits de traitement en rotation des caractères (33) assurant le transfert des caractères avec une éventuelle rotation par rapport à l'orientation associée aux descriptifs des caractères dans la mémoire de caractères, par sélection et transmission directe, sur commande extérieure mise en mémoire dans un registre de commande (330), sans augmentation des temps de transfert.

2. Générateur de caractères selon la revendication 1, *caractérisé en ce que* les circuits de traitement en rotation comportent des sélecteurs (S₀...S₆₃) à plusieurs entrées et une sortie, les entrées de même rang des sélecteurs étant reliés aux fils du bus de sortie de la mémoire caractères (31) dans un ordre correspondant à la description du caractère dans une position donnée après rotation.

3. Générateur de caractères selon la revendication 2, *caractérisé en ce que*, pour obtenir une visualisation des caractères selon l'une de quatre orientations possibles correspondant à des rotations R = 0, R = π/2 R = π ou R = 3 π/2 par rapport à l'orientation des caractères associée à leur mise en mémoire dans la mémoire caractères (31), les sélecteurs (S₀...S₆₃) sont des sélecteurs à quatre positions commandés simultanément par deux bits de commande définissant l'orientation donnée aux caractères à la sortie du générateur de caractères.

4. Générateur de caractères selon l'une des revendications 1 à 3, *caractérisé en ce qu'il* comporte en outre un circuit de décadrage (34) agissant sur le transfert d'un bloc caractère fourni par la sortie du générateur de caractères pour décaler ce bloc par rapport à une position dans laquelle le bloc serait cadré par rapport à un bloc mémoire.

5. Générateur de caractères selon la revendication 4, *caractérisé en ce que* le circuit de décadrage 34 comporte des moyens de mémorisation $(R_0...R_7)$ dont les sorties sont reliées à des sélecteurs $(C_0...C_7)$ à plusieurs positions aux entrées successives desquels les bits d'un bloc caractère sont appliqués dans le même ordre mais décalés en fonction du décadrage (d) commandé, les bits donnant la valeur du décadrage étant appliqués aux entrées de commande des sélecteurs.

6. Générateur de caractères selon la revendication 5, *caractérisé en ce que*, pour des blocs caractères formés de 8 points sur 8 lignes, soit 64 pixels, et des blocs mémoires de 64 points (8 x 8) dans la mémoire d'image, le décadrage d_horizontal pouvant prendre 8 valeurs (0 à 7), la mise en mémoire dans les moyens de mémorisation $(R_0...R_7)$ s'effectue par blocs de 64 pixels et la lecture par lignes de 8 pixels, les sélecteurs $(C_0...C_7)$ du circuit de décadrage étant des sélecteurs à 8 positions commandés par 3 bits de commande de décadrage qui sont les 3 bits de poids faible de l'adresse d'écriture d'un caractère dans la mémoire d'image destinée à la visualisation.

7. Utilisation du générateur de caractères selon l'une quelconque des revendications précédentes dans un système de visualisation de caractères alphanumériques, avec rotation sur commande des caractères et éventuel décadrage par rapport aux blocs de la mémoire d'images du système.

**Patentansprüche**

1. Zeichengenerator mit einem Zeichenspeicher (31), Mitteln zum Adressieren des Zeichenspeichers (35 bis 39) und einem Zugangsregister (32) zum Zeichenspeicher, dadurch gekennzeichnet, daß der Zeichenspeicher nur einen einzigen Descriptor pro Zeichen aufweist und daß zwischen dem Ausgang des Zeichenspeichers (31) und dem Ausgang des Zeichengenerators Schaltungen (33) zur rotativen Manipulation der zeichen vorgesehen sind, welche die Weitergabe der Zeichen mit einer eventuellen Drehung in Bezug auf die mit den Descriptoren der Zeichen verbundene Orientierung ohne Verlängerung der Übermittlungszeit durch Auswahl und direkte Übertragung aufgrund eines äußeren, in einem Befehlsregister (330) gespeicherten Befehls sicherstellen.

2. Zeichengenerator nach Anspruch 1, *dadurch gekennzeichnet*, daß die Rotationsmanipulationsschaltungen Wähler $(S_0...S_{63})$ mit mehreren Eingängen und einem Ausgang aufweisen, wobei die Wählereingänge gleichen Rangs mit den Ausgangsbusdrähten des Zeichenspeichers (31) in einer Reihenfolge verbunden sind, die der Beschreibung des Zeichens in einer nach der Rotation gegebenen Position entspricht.

3. Zeichengenerator nach Anspruch 2, *dadurch gekennzeichnet*, daß zur Erzielung einer Darstellung der Zeichen in einer der vier möglichen Orientierungen entsprechend den Rotationen R = 0, R = $\pi/2$, R = $\pi$ oder R = 3 $\pi/2$, bezogen auf die den Zeichen bei der Eingabe in den Zeichenspeicher zugeordnete Orientierung, Wähler $(S_0...S_{63})$ mit vier gleichzeitig von zwei Befehlsbits gesteuerten Positionen verwendet werden, wobei die Befehlsbits die den Zeichen am Ausgang des Zeichengenerators erteilte Orientierung bestimmen.

4. Zeichengenerator nach einem der Ansprüche 1 bis 3, *dadurch gekennzeichnet*, daß er weiter eine Versetzungsschaltung (34) aufweist, die auf die Weiterleitung eines vom Ausgang des Zeichengenerators gelieferten Zeichenblocks einwirkt, um den Block in Bezug auf eine Position zu versetzen, in welcher sich der Block im Vergleich zu einem Speicherblock befinden würde.

5. Zeichengenerator nach Anspruch 4, *dadurch gekennzeichnet*, daß die Versetzungsschaltung (34) Speichermittel $(R_0...R_7)$ aufweist, deren Ausgänge mit Mehrpositionswählern $(C_0...C_7)$ verbunden sind, wobei an deren aufeinanderfolgende Eingänge die Bits eines Zeichenblocks in der gleichen Reihenfolge angelegt werden, jedoch verschoben gemäß der befohlenen Versetzung (d), und wobei die den Versetzungswert angebenden Bits an die Befehlsdeingänge der Wähler angelegt werden.

6. Zeichengenerator nach Anspruch 5, *dadurch gekennzeichnet*, daß für Zeichenblöcke von 8 Punkten in 8 Zeilen und somit 64 Pixel und für Speicherblöcke von 64 Punkten (8 x 8) im Bildspeicher, wobei die horizontale Versetzung d acht Werte (0 bis 7) annehmen kann, die Eingabe in die Speichermittel $(R_0...R_7)$ blockweise zu 64 Pixeln und das Auslesen zeilenweise zu 8 Pixeln erfolgt, und wobei die Wähler $(C_0...C_7)$ der Versetzungsschaltung aus Wählern mit 8 Positionen, gesteuert von drei Versetzungsbefehlsbits bestehen, die die drei geringstwertigen Bits der Adresse zum Eingeben eines Zeichens in den zur Wiedergabe bestimmten Bildspeicher bilden.

7. Verwendung des Zeichengenerators nach einem der vorhergehenden Ansprüche in einem Wiedergabesystem für alphanumerische Zeichen, mit auf Befehl erfolgender Zeichenrotation und eventueller Versetzung in Bezug auf die Blöcke des Bildspeichers des Systems.

## Claims

1. A character generator comprising a character memory (31) means for addressing the character memory (35 through 39) and an access register (32) to the character memory, characterized in that the character memory comprises a sole character descriptor, and that circuits (33) for handling characters by rotation are interconnected between the output of the character memory (31) and the output of the character generator for ensuring the transfer of the characters with a possible rotation compared to the orientation associated with the character descriptors in the character memory, by way of selection and direct transmission on external order stored in an instruction register (330), without increasing the transfer time.

2. A character generator according to claim 1, *characterized in that* the rotation handling circuits comprise selectors ($S_0...S_{63}$) having a plurality of inputs and one output, the inputs of the selectors having the same rank being connected to the output bus wires of the character memory (31) in an order which corresponds to the description of the character in a given position after rotation.

3. A character generator according to claim 2, *characterized in that*, in order to obtain a display of characters according to one of the four possible rotations corresponding to R = 0, R = π/2, R = π or R = 3 π/2, related to the orientation of the characters associated with their inscription into the character memory (31), the selectors ($S_0...S_{63}$) are chosen to be four-position selectors, the positions being controlled simultaneously by two instruction bits which define the orientation given to the characters at the output of the character generator.

4. A character generator according to any one of claims 1 to 3, *characterized in that* it further comprises an off-setting circuit (34) acting upon the transfer of a character block delivered by the output of the character generator for off-setting said block in relation to a position, in which the block would be located with respect to a memory block.

5. A character generator according to claim 4, *characterized in that* the off-setting circuit (34) comprises storage means ($R_0...R_7$), whose outputs are connected to multi-position selectors ($C_0...C_7$), to the successive inputs of which the bits of a character block are applied in the same order but offset as a function of the ordered offset (d), the bits providing the offset value being applied to the control inputs of the selectors.

6. A character generator according to claim 5, *characterized in that*, for character blocks formed of 8 points on 8 lines, i.e. 64 pixels, and for memory blocks of 64 points (8 x 8) in the image memory, the horizontal offset d being allowed to assume eight values (0 through 7), the inscription into the storage means ($R_0...R_7$) proceeds by blocks of 64 pixels and the read-out proceeds by lines of 8 pixels, the selectors ($C_0...C_7$) of the off-setting circuit being chosen to be 8-position selectors controlled by three offset instruction bits, which are the three lower weight bits of the write address of a character in the image memory provided for display.

7. The use of the character generator according to any one of the preceding claims in a display system of alpha-numerical characters, suitable for rotating characters on order and possibly off-setting in relation to blocks in the image memory of the system.

# FIG_1

BUS U.T — 10

INTERFACE
BUS U.T — 20

BDGC

40

SEQUENCEUR

30

GENERATEUR
DE
CARACTERES

50

CIRCUIT DE GESTION
D'ADRESSES

DBL

70

INTERFACE
BUS BLOC

60

REGISTRES DE
SORTIE DE DONNEES

80

REGISTRES DE
SORTIE D'ADRESSES

BUS BLOC

100

# FIG_2

$$R = \qquad 0 \qquad , \qquad \frac{\pi}{2} \qquad , \qquad \pi \qquad , \qquad \frac{3\pi}{2}$$

1

# FIG_3

# FIG_4

BDGC

REGISTRE D'ACCES RAM CARACTERE — 32

REGISTRE CODE CARACTERE — 36

REGISTRE " POLICE " — 35

REGISTRE — 330

REGISTRE D'ACCES RAM ADRESSAGE — 38

MEMOIRE D'ADRESSAGE — 37

RAM CARACTERES

PROM CARACTERES — 31

COMPTEUR ADRESSES MEMOIRE CARACTERE — 39

CIRCUITS DE SELECTION DE ROTATION — 33

De 40

CIRCUIT DE DECADRAGE — 34

DECADRAGE CARACTERE

DBL

## FIG_5

MEMOIRES CARACTERES — 31

33

64DC

$b_0$  $b_1$  $b_{62}$ $b_{63}$

0  7  63 56  1  15  62 48  11  30 52 33  61  40 2  23  62 48  1  15  63  56  0  7

2

$S_0$  $P_0$  $S_1$  $P_1$  $S_{11}$  $P_{11}$  $S_{61}$  $P_{61}$  $S_{62}$  $P_{62}$  $S_{63}$  $P_{63}$

$P_0$  $P_7$  $P_8$  $P_{15}$  $P_{16}$  $P_{23}$  $P_{24}$  $P_{31}$  $P_{32}$  $P_{39}$  $P_{40}$  $P_{47}$  $P_{48}$  $P_{55}$  $P_{56}$  $P_{63}$

CHGT CARACTERE

SEL LIGNE

8  $R_0$  8  $R_1$  8  $R_2$  8  $R_3$  8  $R_4$  8  $R_5$  8  $R_6$  8  $R_7$

8(DP)

8  8  8  8  8  8  8  8

DECADRAGE CARACTERE

$C_0$ 1  $C_1$ 1  $C_2$ 1  $C_3$ 1  $C_4$ 1  $C_5$ 1  $C_6$ 1  $C_7$ 1

3

8 DBL

DBL

34

## FIG_6

DBL

0  1  2  3  4  5  6  7

Dec

0  1  0

$P_6$  $P_7$  $P_0$  $P_1$  $P_2$  $P_3$  $P_4$  $P_5$

Val pour ecriture
Val (x)

Val(x+8)

# FIG_7

BUS DONNEES

11

BUS UT

10 {

13 BUS DESTINATAIRE

12 BUS ADRESSES

16

16

16

6    6

8    16

DESTI → REGISTRE DESTINATAIRE

MEMOIRE TAMPON D ADRESSES    23

REGISTRE D ENTREE/SORTIE DE DONNEES    21

26

27

6    24

NDESTI →

CIRCUIT DE DECODAGE INIT

REGISTRE D'ADRESSES

CIRCUIT LOGIQUE DE COMMANDE

6    BAGC

CIRCUIT DE DECODAGE DE FONCTIONS    22

7    16

25

INITIALISATION PROGRAMME

BDGC

# FIG_8

7

45

S40

COMPTEUR MICRO-PROGRAMME    43

ADRESSES    11

PROM SEQUENCEUR    44

11 DONNEES

REGISTRE PIPE-LINE

EXT →

11

H

LD  I  COUNT

CIRCUIT LOGIQUE DE COMMANDE

SELECTION TEST

AUTORISATION DE CHARGE DU COMPTEUR

SELECTEUR DE TEST

TEST

42

41

SIGNAUX DE TEST

7

# FIG_9

BDGC

53 TRANSLATEUR X

51 REGISTRE X

12

52 REGISTRE Y

54 TRANSLATEUR Y

55 ALU X

56 ALU Y

59 REGISTRES DE LECTURE, X,Y

57 ACCU X

12

58 ACCU Y

12

11

3

3

DECADRAGE CARACTERE
DECODAGE POINT

DECODAGE LIGNE

8

8

80 REGISTRES DE SORTIE D'ADRESSES

VERS BUS BLOC 100